Europäisches Patentamt

**European Patent Office**

Office européen des brevets

(11) Veröffentlichungsnummer: **0 215 253**
**B1**

(12) **EUROPÄISCHE PATENTSCHRIFT**

(45) Veröffentlichungstag der Patentschrift:
26.04.89

(21) Anmeldenummer: **86110562.5**

(22) Anmeldetag: **30.07.86**

(51) Int. Cl.⁴: **F01N 3/28, B01J 35/04**

(54) Katalysatorträgerfolie.

(30) Priorität: **12.08.85 DE 3528881**

(43) Veröffentlichungstag der Anmeldung:
**25.03.87 Patentblatt 87/13**

(45) Bekanntmachung des Hinweises auf die Patenterteilung:
**26.04.89 Patentblatt 89/17**

(84) Benannte Vertragsstaaten:
**AT BE CH DE FR GB IT LI LU NL SE**

(56) Entgegenhaltungen:
**FR-A- 2 208 447**
**US-A- 4 349 450**

(73) Patentinhaber: **INTERATOM Gesellschaft mit beschränkter Haftung, Friedrich-Ebert-Strasse, D-5060 Bergisch-Gladbach 1(DE)**

(72) Erfinder: **Cyron, Theodor, Dipl.-Ing., Kurt-Schumacher-Strasse 12, D-5060 Bergisch Gladbach 3(DE)**
Erfinder: **Staubwasser, Wolfgang, Dr. Dipl.-Ing., Hubertushöhe 2, D-5060 Bergisch Gladbach 1(DE)**

(74) Vertreter: **Mehl, Ernst, Dipl.-Ing. et al, Postfach 22 13 17, D-8000 München 22(DE)**

ACTORUM AG

## Beschreibung

Die vorliegende Erfindung betrifft eine metallische Katalysatorträgerfolie nach dem Oberbegriff des Anspruchs 1. Solche dünnen metallischen Folien werden vorzugsweise als glatte oder gewellte Lagen zur Herstellung von Katalysatorträgerkörpern verwendet. Im allgemeinen werden solche Folien zunächst zu einem Katalysatorträgerkörper, einer sogenannten Matrix, mit wabenförmigen Kanälen zusammengefügt und anschließend beschichtet. Auch eine Beschichtung vor dem Aufwickeln oder Schichten der einzelnen Lagen ist bekannt.

Die Beschichtung mit katalytischem Material selbst stellt einen wichtigen und schwierigen Schritt bei der Herstellung von Katalysatoren dar. Da häufig als Katalysatoren Metalloxide und andere keramische Materialien verwendet werden, müssen die Trägerbleche besondere Eigenschaften aufweisen, damit eine gute Haftung der Beschichtung erzielt werden kann.

In der DE-A 2 853 023 sind bereits verschiedene Metallfolien beschrieben, die sich besonders für eine Beschichtung eignen. Aus dieser Schrift ist es bekannt, daß eine geeignete Perforation der Folie die Haftung der Beschichtung verbessert, da sich Brücken durch die Löcher hindurch zwischen den Beschichtungen auf beiden Seiten der Folie ausbilden. In dieser Schrift werden jedoch nur makroskopische Löcher mit Maßen in der Größenordnung 1 mm beschrieben, welche mit aufwendigen Methoden erzeugt werden und für eine optimale Haftung der Beschichtung zu groß sind.

Ferner ist in der DE-A 2 226 662 auch schon erwähnt, daß Katalysatorträgerfolien durch galvanische Abscheidung der gewünschten Legierungsbestandteile gebildet werden können. Dabei wird auch die Möglichkeit erwähnt, aus solchen Folien Streckmetall herzustellen, welches makroskopische rautenförmige Löcher aufweist. Auch diese Ausführungsform von Trägerfolien verhindert nicht das Abbröckeln einzelner Teile der Beschichtung.

Aufgabe der vorliegenden Erfindung ist eine metallische, mit einer Beschichtung aus keramischem Material, vorzugsweise Katalysatormaterial, versehene Trägerfolie, welche auch bei thermischen Wechselbelastungen eine besonders große Haftfestigkeit der Beschichtung aufweist. Dabei soll die Folie möglichst wirtschaftlich herstellbar sein.

Zur Lösung dieser Aufgabe wird gemäß dem Anspruch 1 vorgeschlagen, daß die Folie galvanoplastisch hergestellt sein und mit feinkörniger Keramikmasse beschichtet sein soll, wobei die Dicke der Folie zwischen 30 und 60 μ und der Durchmesser bzw. die sonstigen Abmessungen der Löcher und die Abstände zwischen den Löchern jeweils etwa zwischen 30 und 300 μ liegen sollten. Das Vorhandensein von einer Vielzahl sehr kleiner Löcher, die deutlich kleiner sind als die nach dem Stand der Technik bekannten, ermöglicht eine besonders haftfeste Beschichtung, wie anhand der Zeichnung noch näher erläutert wird. Außerdem ist die Folie wirtschaftlich herstellbar.

In weiterer Ausgestaltung der Erfindung wird im Anspruch 2 vorgeschlagen, daß die Löcher etwa 10–70% der gesamten Folienfläche ausmachen, vorzugsweise 30–50%. Ein ähnlicher Anteil an Löchern wurde bei dem Stand der Technik auch für den Anteil an makroskopischen Löchern vorgeschlagen, da dies für die Stabilität der Folie einerseits und den Aufwand an Material andererseits von Vorteil ist. Bei mikroskopischen Löchern verringert sich allerdings die Gefahr der Kerbwirkung und des Reißens der Folie an einzelnen Stellen.

Bei der galvanoplastischen Herstellung brauchen außerdem die durch Löcher ausgesparten Materialteile gar nicht erst abgeschieden werden, was erhebliche Einsparungen bewirkt.

Weitere vorteilhafte Ausführungen der Erfindung werden in den Ansprüchen 3 bis 7 beschrieben. Eine Anordnung der Löcher in regelmäßigen Abständen, wobei die Abstände in der gleichen Größenordnung liegen wie die Durchmesser bzw. sonstigen Abmessungen der Löcher ist für die optimale Ausnutzung der Erfindung unter Beibehaltung der Stabilität der Folie besonders günstig. Fernerhin ist es für die Stabilität der Folie auch von Vorteil, wenn die Löcher einen Durchmesser bzw. sonstige Abmessungen vom ein- bis zehnfachen der Dicke der Folie haben. Wie sich anhand der Zeichnung ergibt, entstehen bei dieser Wahl der Abmessungen zwischen den Löchern Materialbrücken mit einem an der engsten Stelle z.B. etwa quadratischen Querschnitt, wodurch eine optimale Stabilität bei minimalem Materialeinsatz erreicht wird. Natürlich sind auch Abweichungen von diesen optimalen Maßen je nach Bedürfnis und technischen Gegebenheiten möglich. Im allgemeinen wird es sinnvoll sein, annähernd runde Löcher vorzusehen, jedoch können die Kanten der Löcher abgerundet sein. Durch eine Vielzahl von festen Verbindungsbrücken zwischen den Schichten auf beiden Seiten der Folie wird eine große Haftfähigkeit der Beschichtung erreicht. Selbst beim Auftreten von zahlreichen Rissen in der Oberflächenbeschichtung, beispielsweise durch thermische Wechselbelastung, entstehen im allgemeinen etwa nietenförmige Beschichtungsfragmente, welche sich nicht von den Folien ablösen können, selbst wenn die Haftung an der Folienoberfläche nur gering ist. Durch die Verwendung von mikroskopischen Löchern können auch sehr kleine Fragmente, die bei makroskopischen Löchern keinerlei Halt mehr hätten, an der Folie festgehalten werden, da Fragmente in der Größenordnung der Löcher relativ selten auftreten.

Erfindungsgemäße gelochte Folien lassen sich prinzipiell auf unterschiedliche Weise galvanoplastisch herstellen. Besonders günstig ist jedoch ein Verfahren gemäß dem Anspruch 8, bei welchem die Trägerfolie galvanoplastisch aus Schichten der einzelnen Legierungsbestandteile, z.B. Eisen, Chrom, Aluminium, aufgebaut und durch anschließende Diffusion bei hoher Temperatur legiert wird. Dabei können die Löcher direkt beim Abscheiden der Schichten ausgespart werden, durch geeignete Form der Abscheidewalze. Dieses Verfahren hat den Vorteil, daß das durch die Löcher eingesparte Material gar nicht erst abgeschieden werden muß, so daß nur ein Arbeitsgang nötig ist und entsprechende Anteile an Energie und Material (z.B. 50%) eingespart werden können.

Die einzelnen Schichten können dabei auch aus Unterlegierungen, d.h. aus zwei oder mehr der insgesamt benötigten Legierungsbestandteile, bestehen, sofern ein gemeinsames Abscheiden solcher Unterlegierungen möglich ist.

Anhand der Zeichnung soll ein Ausführungsbeispiel der Erfindung schematisch erläutert werden. Es zeigen

Figur 1 einen sehr stark vergrößerten Ausschnitt aus einer erfindungsgemäßen Folie,

Figur 2 einen Schnitt durch eine erfindungsgemäße Folie mit Beschichtung und

Figur 3 die schematische Darstellung des Aufbaues einer galvanoplastisch hergestellten Folie vor der Diffusion der Bestandteile und vor der Beschichtung.

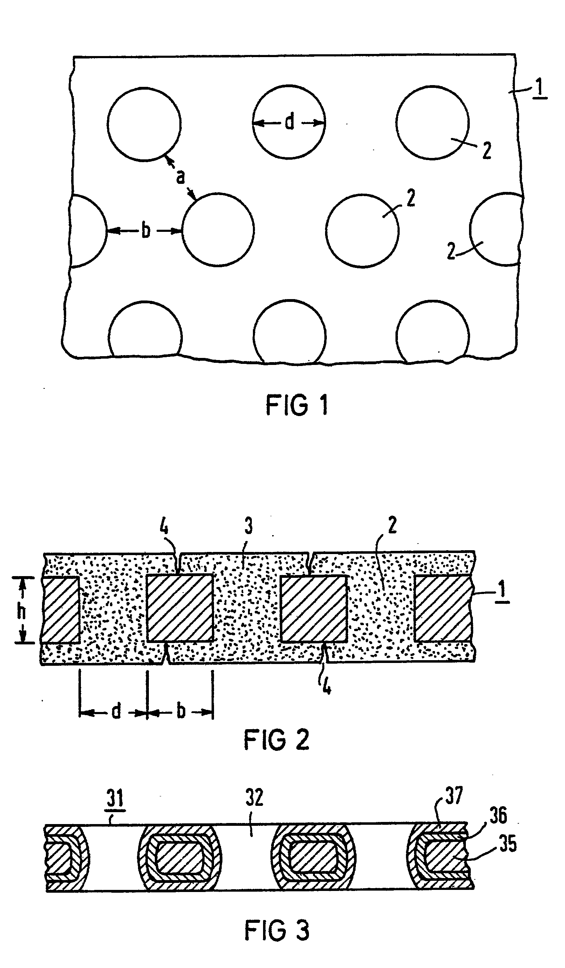

Figur 1 veranschaulicht den Aufbau einer erfindungsgemäßen Folie am Beispiel von runden Löchern mit gleichmäßigem Abstand untereinander. Dabei ist zu beachten, daß die Zeichnung eine erhebliche Vergrößerung darstellt, wobei der dargestellte Abschnitt in Wirklichkeit weit weniger als 1 mm beträgt. Die Folie 1 weist runde Löcher 2 in gleichmäßigen Abständen a, b auf. Der Durchmesser d der Löcher ist etwa in der gleichen Größenordnung wie die Abstände a, b. Der Durchmesser d der Löcher ist außerdem vorzugsweise, wie auch aus Figur 2 zu ersehen, etwa gleich der Dicke der Folie 1.

Figur 2 zeigt einen schematischen Schnitt durch eine beschichtete erfindungsgemäße Folie. Diese Folie 1 weist wiederum Löcher 2 auf, und ist mit einer Beschichtung 3 versehen. Diese Beschichtung 3 bildet durch die Löcher 2 hindurch Verbindungsbrücken, so daß selbst beim Auftreten von zahlreichen Rissen 4, welche im allgemeinen an den dünnsten Stellen der Beschichtung 3 auftreten, keine abbröckelnden Fragmente der Beschichtung entstehen können. Die entstehenden Fragmente haben im ungünstigsten Fall die Form einer winzigen Niete, welche in den Löchern 2 verankert bleibt. Anhand der Figur 2 sind nochmals die Größenverhältnisse zwischen Durchmesser d der Löcher, Dicke h der Folie und Größe der Abstände b der Löcher 2. Die Beschichtung 3 ist mit etwas übertriebener Dicke eingezeichnet. Es sei darauf hingewiesen, daß die keramische Beschichtung im allgemeinen als Aufschlämmung von feinen Körnern aufgetragen wird, wobei die Korngröße erheblich kleiner als der Durchmesser der Löcher 2 ist. Auf diese Weise ist selbst bei mikroskopischen Löchern, wie sie in der vorliegenden Erfindung vorgeschlagen werden, die Bildung von Brücken zwischen den beiden Beschichtungsseiten sichergestellt. Auf die Haftung der Beschichtung an der Folienoberfläche kommt es daher nicht mehr an.

Zur Veranschaulichung des Aufbaus einer galvanoplastisch hergestellten Folie zeigt die Figur 3 einen Schnitt durch eine solche Folie vor dem Ineinanderdiffundieren der einzelnen Legierungsbestandteile. Die Folie besteht aus einer zuerst hergestellten perforierten Schicht 35, auf welche nacheinander weitere Legierungsbestandteile 36, 37 galvanisch aufgebracht sind. Diese Schichten bilden sich auch auf den Innenseiten der Löcher 32 aus, wobei jedoch durch geeignete Bemaßung der Löcher in der Schicht 35 der gewünschte Enddurchmesser der Löcher 32 sichergestellt werden kann. Die Kanten der Löcher 32 können dabei abgerundet sein. Die gesamte Folie 31 wird später durch Diffundieren legiert, wobei je nach Anwendungsfall auch zunächst die Verformung in die gewünschte Form und gegebenenfalls eine Beschichtung stattfinden kann.

Die vorliegende Erfindung eignet sich für Katalysatoren, die eine besonders lange Lebensdauer bei hoher mechanischer Beanspruchung aufweisen sollen.

## Patentansprüche

1. Galvanisch hergestellte metallische Trägerfolie (1), insbesondere aus hochtemperaturbeständigem und/oder korrosionsfestem Stahl, beschichtet mit einem keramischen Material, gekennzeichnet durch folgende Merkmale:

a) die Folie ist galvanoplastisch unter Aussparung von Löchern (2) hergestellt und hat eine Dicke von 30 bis 60 $\mu$;

b) der Durchmesser (d) bzw. die sonstigen Abmessungen der Löcher (2) und die Abstände (a, b) zwischen den Löchern (2) liegen je zwischen 30 $\mu$ und 300 $\mu$;

c) die Folie ist auf ihren beiden Seiten mit einer keramischen Beschichtung (3) versehen, die aus feinen Körnern gebildet ist, wobei die Korngröße erheblich kleiner als der Durchmesser der Löcher (2) ist;

d) die Beschichtung (3) bildet durch die Löcher (2) der Folie (1) hindurch feste Verbindungsbrücken zwischen den Beschichtungen (3) auf beiden Seiten der Folie (1).

2. Beschichtete Trägerfolie nach Anspruch 1, dadurch gekennzeichnet, daß die Löcher (2) etwa 10 bis 70% der gesamten Folienfläche ausmachen, vorzugsweise 30 bis 50%.

3. Beschichtete Trägerfolie nach Anspruch 1 oder 2, dadurch gekennzeichnet, daß die Löcher (2) in regelmäßigen Abständen (a, b) angeordnet sind, wobei die Abstände (a, b) in der gleichen Größenordnung liegen wie die Durchmesser (d) bzw. sonstigen Abmessungen der Löcher (2).

4. Beschichtete Trägerfolie nach Anspruch 1, 2 oder 3, dadurch gekennzeichnet, daß die Löcher (2) einen Durchmesser (d) bzw. sonstige Abmessungen vom 1- bis 10fachen der Dicke (h) der Folie (1) haben.

5. Beschichtete Trägerfolie nach einem der vorherigen Ansprüche, dadurch gekennzeichnet, daß die Löcher (2) etwa rund sind.

6. Beschichtete Trägerfolie nach einem der vorherigen Ansprüche, dadurch gekennzeichnet, daß die Löcher (32) abgerundete Kanten aufweisen.

7. Beschichtete Trägerfolie nach einem der vorherigen Ansprüche, dadurch gekennzeichnet, daß die Beschichtung durch zahlreiche Risse (4) in der keramischen Beschichtung (3) in zumindest teilweise etwa nietenförmige Beschichtungsfragmente unterteilt ist, welche in den Löchern (2) verankert sind.

8. Verfahren zur Herstellung einer beschichteten Trägerfolie nach einem der Ansprüche 1 bis 7, gekennzeichnet durch folgende Merkmale:

a) die Trägerfolie (31) wird galvanoplastisch aus Schichten (35, 36, 37) einzelner oder mehrerer Legierungsbestandteile, z.B. Eisen, Chrom, Aluminium aufgebaut, wobei Löcher (32) direkt beim Abscheiden der Schichten (35, 36, 37) ausgespart werden;

b) die Trägerfolie (31) wird durch nach der Abscheidung erfolgende Diffusion bei hoher Temperatur legiert;

c) die Folie wird mit einer keramischen Beschichtung versehen.

**Revendications**

1. Feuille de support (1) métallique préparée par voie galvanoplastique, notamment en acier résistant aux températures élevées et/ou à la corrosion et revêtue d'un matériau céramique, remarquable par les caractéristiques suivantes:

a) la feuille est fabriquée par voie galvanoplastique en ménageant des trous (2) et a une épaisseur de 30 à 60 microns;

b) le diamètre (d) ou les autres dimensions des trous (2) et les distances (a, b) entre les trous (2) sont compris entre 30 microns et 300 microns;

c) la feuille est munie des deux côtés d'un revêtement (3) en céramique formé de grains fins, la granulométrie étant considérablement plus petite que le diamètre des trous (2);

d) le revêtement (3) forme, à travers les trous (2) de la feuille (1), des ponts solides de liaison entre les revêtements (3) des deux côtés de la feuille (1).

2. Feuille de support revêtue suivant la revendication 1, caractérisée en ce que les trous (2) représentent de 10 à 70% environ de la surface totale de la feuille et, de préférence, de 30 à 50%.

3. Feuille de support revêtue suivant la revendication 1 ou 2, caractérisée en ce que les trous (2) sont disposés à des intervalles (a, b) réguliers, les intervalles (a, b) étant du même ordre de grandeur que le diamètre (d) ou que les autres dimensions des trous (2).

4. Feuille de support revêtue suivant la revendication 1, 2 ou 3, caractérisée en ce que les trous (2) ont un diamètre (d) ou d'autres dimensions représentant de 1 à 10 fois l'épaisseur (h) de la feuille (1).

5. Feuille de support revêtue selon l'une des revendications précédentes, caractérisée en ce que les trous (2) sont sensiblement circulaires.

6. Feuille de support revêtue suivant l'une des revendications précédentes, caractérisée en ce que les trous (32) comportent des bords arrondis.

7. Feuille de support revêtue suivant l'une des revendications précédentes, caractérisée en ce que le revêtement est subdivisé par de très nombreuses fentes (4) ménagées dans le revêtement (3) en céramique, en au moins des fragments de revêtement qui ont à peu près la forme d'un rivet et qui sont ancrés dans les trous (2).

8. Procédé de fabrication d'une feuille de support revêtue suivant l'une des revendications 1 à 7, remarquable par les caractéristiques suivantes:

a) la feuille de support (31) est constituée, par voie galvanoplastique, à partir de couches (35, 36, 37) d'un ou de plusieurs constituants d'alliages, par exemple de fer, de chrome, d'aluminium, des trous (32) étant ménagés directement, lors du dépôt des couches (35, 36, 37);

b) la feuille de support (31) est alliée à une température élevée par une diffusion se produisant après le dépôt;

c) la feuille est munie d'un revêtement en céramique.

**Claims**

1. Electrically produced metallic support foil (1), more particularly made of high-temperature resistant and/or corrosion resistant steel, coated with a ceramic material, characterised by the following features:

a) the foil is produced by electroforming by hollowing out holes (2) and has a thickness of 30 to 60 $\mu$;

b) the diameter (d) or the other dimensions of the holes (2) and the distances (a, b) between the holes (2) lie each between 30 $\mu$ and 300 $\mu$;

c) the foil is provided on both of its sides with a ceramic coating (3) which is formed of fine grains, the grain size being considerably smaller than the diameter of the holes (2);

d) the coating (3) forms through the holes (2) of the foil (1) firm connecting bridges between the coatings (3) on both sides of the foil (1).

2. Coated support foil according to claim 1 characterised in that the holes (2) constitute approximately 10 to 70% of the total foil surface, preferably 30 to 50%.

3. Coated support foil according to claim 1 or 2, characterised in that the holes (2) are arranged at regular distances (a, b), in which case the distances (a, b) are of the same order of magnitude as the diameters (d) or other dimensions of the holes (2).

4. Coated support foil according to claims 1, 2 or 3, characterised in that the holes (2) have a diameter (d) or other dimensions of 1 to 10 times the thickness (h) of the foil (1).

5. Coated support foil according to one of the previous claims, characterised in that the holes (2) are substantially round.

6. Coated support foil according to one of the previous claims, characterised in that the holes (32) have rounded-off edges.

7. Coated support foil according to one of the previous claims, characterised in that the coating, as a result of numerous cracks (4) in the ceramic coating (3), is subdivided into at least in part substantially rivet-like coating fragments, which are anchored in the holes (2).

8. Method for the production of a coated support foil according to one of the claims 1 to 7, characterised by the following features:

a) the support foil (31) is built up by electroforming in layers (35, 36, 37) of individual or several alloying constituents, e.g. iron, chromium, aluminium, holes (32) being hollowed out directly when depositing the layers (35, 36, 37);

b) the support foil (31) is alloyed at a high temperature by diffusion which takes place after the depositing;

c) the foil is provided with a ceramic coating.

FIG 1

FIG 2

FIG 3